# EUROPÄISCHE PATENTANMELDUNG

(11) **EP 4 191 891 A1**
(43) Veröffentlichungstag der Anmeldung: **07.06.2023**
(21) Anmeldenummer: 21211606.5
(22) Anmeldetag: 01.12.2021
(51) Int. Cl.: H04B 3/54

(54) **SYSTEM UND VERFAHREN ZUR LEITUNGSGEBUNDENEN KOMMUNIKATION ZWISCHEN EINEM ERSTEN UND EINEM ZWEITEN KOMMUNIKATIONSMODUL**

(71) Anmelder: Hilti Aktiengesellschaft, 9494 Schaan (LI)
(72) Erfinder: Hauser, Klaus, 86830 Schwabmünchen (DE); Candussio, Michael, 82140 Olching (DE); Beckert, Benedikt, 86830 Schwabmünchen (DE)
(74) Vertreter: Hilti Aktiengesellschaft Corporate Intellectual Property

(57) **Zusammenfassung**

Die vorliegende Erfindung betrifft ein System zur leitungsgebundenen Kommunikation zwischen einem ersten Kommunikationsmodul und einem zweiten Kommunikationsmodul, wobei die zwischen dem ersten Kommunikationsmodul und dem zweiten Kommunikationsmodul ausgetauschten Daten blockweise und mit einer hohen Baudrate gesendet werden. In einem zweiten Aspekt betrifft die Erfindung ein Verfahren zur leitungsgebundenen Kommunikation zwischen einem ersten Kommunikationsmodul und einem zweiten Kommunikationsmodul. Mit der Erfindung kann eine besonders effektive, schnelle und stromsparende leitungsgebundenen Kommunikation zwischen den beteiligten Kommunikationspartnern bereitgestellt werden.

## Beschreibung

Die vorliegende Erfindung betrifft ein System zur leitungsgebundenen Kommunikation zwischen einem ersten Kommunikationsmodul und einem zweiten Kommunikationsmodul, wobei die zwischen dem ersten Kommunikationsmodul und dem zweiten Kommunikationsmodul ausgetauschten Daten blockweise und mit einer hohen Baudrate gesendet werden. In einem zweiten Aspekt betrifft die Erfindung ein Verfahren zur leitungsgebundenen Kommunikation zwischen einem ersten Kommunikationsmodul und einem zweiten Kommunikationsmodul. Mit der Erfindung kann eine besonders effektive, schnelle und stromsparende leitungsgebundenen Kommunikation zwischen beteiligten Kommunikationspartnern bereitgestellt werden.

### Hintergrund der Erfindung:

Im Bereich der Werkzeugmaschinen ist es bekannt, dass Werkzeugmaschinen zur Kommunikation mit verschiedenen Kommunikationspartnern in der Lage sind. Beispielsweise können Werkzeugmaschinen mit Hilfsgeräten, wie Staubsaugern oder Vorschubvorrichtungen, kommunizieren, um Melde- oder Steuersignale auszutauschen. Es kann aber auch gewünscht sein, dass Werkzeugmaschinen mit internen Komponenten, wie beispielweise einer Energieversorgungsvorrichtung, kommunizieren können. Insbesondere bei solchen "internen" Kommunikationsvorgängen besteht ein Bedürfnis nach Kommunikationslösungen und -verfahren, die mit einem minimalen, insbesondere gegenüber dem Stand der Technik reduzierten Bedarf an elektrischer Energie auskommen. Dieses Bedürfnis besteht besonders bei batterie- oder akkubetriebenen Werkzeugmaschinen, um die Laufzeit der Batterie und/oder des Akkus nicht unnötig zu verkürzen. Bisher ist es häufig so, dass eine robuste und wenig störungsempfindliche leitungsgebundene Kommunikation nur dann möglich ist, wenn starke Stromimpulse mit einem hohen Energiebedarf verwendet werden, um die Daten zwischen den Kommunikationspartnern auszutauschen.

Ein Nachteil der mit einem hohen Energieverbrauch für Kommunikationszwecke einhergeht, ist, dass in der Werkzeugmaschine aufwendigere und kostenintensivere Energieversorgungsvorrichtungen vorgesehen sein bzw. verwendet werden müssen. Dabei kann es sich beispielsweise um Schaltnetzteile oder Linearregler handeln. Allerdings weisen vor allem Linearregler den Nachteil auf, dass sie einen erhöhten Kühlaufwand haben. Das bedeutet, dass zusätzliche Kühlmaßnahmen ergriffen werden müssen, um das Kommunikationssystem bzw. seine beteiligten Partner ausreichend zu kühlen. Dies widerspricht aber dem allgemeinen Ansinnen, gerade Werkzeugmaschinen, mit denen Arbeiter zum Teil stundenlang auf Baustellen arbeiten, handlich, kompakt und leicht auszugestalten.

Die Aufgabe, die der vorliegenden Erfindung zugrunde liegt, besteht darin, die genannten Nachteile und Mängel des Standes der Technik zu überwinden und Systeme und Verfahren zur leitungsgebundenen Kommunikation zwischen einem ersten Kommunikationsmodul und einem zweiten Kommunikationsmodul anzugeben, die mit einem reduzierten Bedarf an elektrischer Energie auskommen und so die Laufzeit einer Energieversorgungsvorrichtung nicht über das erforderliche Maß hinaus verkürzen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System zur leitungsgebundenen Kommunikation zwischen einem ersten Kommunikationsmodul und einem zweiten Kommunikationsmodul vorgesehen, wobei die zwischen dem ersten Kommunikationsmodul und dem zweiten Kommunikationsmodul ausgetauschten Daten blockweise und mit einer hohen Baudrate gesendet werden. Das blockweise Versenden der Daten durch einen Sender bedeutet im Sinne der Erfindung bevorzugt, dass sich bei dem Austausch der Daten Zeitspannen mit hoher Übertragungsintensität und Übertragungspausen abwechseln. Dabei werden die Zeitspannen mit einer hoher Übertragungsintensität im Sinne der Erfindung bevorzugt auch als "bursts" bezeichnet, während die Übertragungspausen vorzugsweise auch als "breaks" bezeichnet werden können. Es ist im Sinne der Erfindung bevorzugt, dass eine hohe Übertragungsintensität einer hohen Baudrate entspricht.

Die Kommunikationsmodule können insbesondere Bestandteile einer Werkzeugmaschine und einer Energieversorgungsvorrichtung einer Werkzeugmaschine sein. Das vorgeschlagene Kommunikationssystem wird dann vorzugsweise zur Kommunikation zwischen der Werkzeugmaschine und ihrer Energieversorgungsvorrichtung genutzt. Es kann aber im Sinne der Erfindung auch bevorzugt sein, dass die Kommunikationsmodule Bestandteile einer Energieversorgungsvorrichtung und eines entsprechenden Ladegeräts sind. Das vorgeschlagene Kommunikationssystem wird dann vorzugsweise zur Kommunikation zwischen der Energieversorgungsvorrichtung und dem Ladegerät der Energieversorgungsvorrichtung genutzt. Darüber hinaus kann das vorgeschlagene Kommunikationssystem zur Kommunikation zwischen der Energieversorgungsvorrichtung und einem Kommunikationsmodul genutzt werden. Eines der Kommunikationsmodule ist dann Bestandteil der Energieversorgungsvorrichtung, während das andere Kommunikationsmodul Bestandteil des Kommunikationsmoduls ist. Das Kommunikationsmodul kann beispielsweise zwischen der Energieversorgungseinrichtung und einem Ladegerät der Energieversorgungseinrichtung angeordnet sein und dazu ausgebildet sein, Daten aus der Energieversorgungseinrichtung auszulesen und über eine Mobilfunkverbindung an einen Empfänger, wie beispielsweise eine Cloud oder dergleichen, zu senden. Zur Übermittlung von Daten mittels der Mobilfunkverbindung kann das Kommunikationsmodul ein integriertes Mobilfunkmodul aufweisen.

Mit der Erfindung kann eine besonders einfache und kostengünstige Datenübertragung, beispielsweise in einer Werkzeugmaschine, ermöglicht werden, wobei der reduzierte Energieverbrauch für die Datenübertragung vorteilhafterweise dazu führt, dass das vorgeschlagene Kommunikationssystem ohne Kühlung oder erhöhten Kühlaufwand auskommt.

Mit anderen Worten können die Zeitspannen mit hoher Übertragungsintensität durch die Baudrate beschrieben werden, wobei die Baudrate vorzugsweise in einem Bereich von 100 kBit/s bis 5 MBit/s liegen kann. Besonders bevorzugt sind Baudraten von ca. 115.000 Bit/s, 230.000 Bits/s oder 461.000 Bit/s, wobei Abweichungen von diesen Baudraten bei bis zu +/- 10 % typisch sind und auftreten können. Die vorgeschlagene Erfindung ist vorzugsweise nicht so zu verstehen, dass die Baudrate während der Übertragung reduziert wird. Es ist vielmehr im Sinne der Erfindung bevorzugt, dass die Baudrate während der Datenübertragung im Wesentlichen konstant bleibt und dass in den Übertragungspausen schlicht keine Übertragung stattfindet. Es war vollkommen überraschend, dass auf diese Weise der Stromverbrauch der Datenübertragung erheblich reduziert werden kann.

Durch die Erfindung kann eine besonders robuste, störungsarme Möglichkeit für die leitungsgebundene Kommunikation zwischen einem Sender und einem Empfänger bereitgestellt werden. Es hat sich überraschenderweise herausgestellt, dass mit der Erfindung auch eine energiesparende Kommunikationsmöglichkeit zwischen Kommunikationsmodulen angegeben werden kann. Insbesondere kann der mittlere Stromverbrauch der erfindungsgemäßen Datenübermittlung gegenüber konventionellen Verfahren erheblich gesenkt werden. Dies ist insbesondere darauf zurückzuführen, dass die Kommunikationsleitungen zwischen den Kommunikationsmodulen in den Übertragungs- oder Kommunikationspausen in einem Standby-Modus vorliegen, so dass in diesem Zustand ihr Energie- oder Stromverbrauch deutlich reduziert ist im Vergleich zum Energieoder Stromverbrauch während der Datenübertragung. Der Standby-Modus stellt vorzugsweise einen stromsparenden Modus innerhalb des Kommunikationssystems dar.

Bei der Baudrate handelt es sich im Sinne der Erfindung um eine Symbolrate, also vorzugsweise die Rate oder Geschwindigkeit, mit der Symbole pro Zeiteinheit übertragen werden. Die Zeiteinheit kann beispielsweise eine Sekunde (s) sein. Es ist im Sinne der Erfindung bevorzugt, dass ein Symbol einer definierten, messbaren Signaländerung im physischen Übertragungsmedium entspricht, wobei die Baudrate einer Datenübertragung vorzugsweise auf Sende- und Empfangsseite gleich oder im Wesentlichen gleich ist. Vorzugsweise kann ein Symbol je nach Codierung unterschiedlich viele Bits eines Datenstromes repräsentieren.

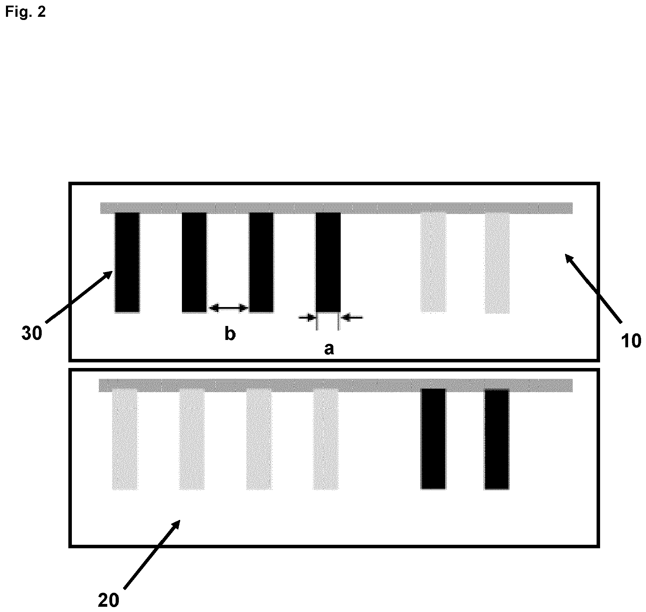

Bei den Kommunikationspartnern kann es sich um Kommunikationsmodule handeln, zwischen denen eine Kommunikationsverbindung besteht. Die Kommunikationsverbindung ist leitungsoder drahtgebunden ausgestaltet, wobei die leitungs- oder drahtgebundene Kommunikationsverbindung im Sinne der Erfindung bevorzugt auch als Kommunikationsleitung bezeichnet werden kann. Es ist im Sinne der Erfindung bevorzugt, dass beide Kommunikationsmodule sowohl Daten senden, als auch empfangen können. Vorzugsweise fungiert während einer Datenübertragung je eines der Kommunikationsmodule als Sender, während das andere Kommunikationsmodul als Empfänger dient. Vorzugsweise können die Kommunikationsmodule ihre Rollen tauschen. Beispielsweise können zunächst einzelne Datenblöcke vom ersten Kommunikationsmodul als Sender gesendet und vom zweiten Kommunikationsmodul als Empfänger empfangen werden, wobei anschließend ein Rollentausch stattfinden kann. Nach dem Rollentausch kann beispielsweise das zweite Kommunikationsmodul Datenblöcke senden, während das erste Kommunikationsmodul die Datenblöcke empfängt. Ein entsprechendes Vorgehen ist beispielhaft und schematisch in Fig. 2 dargestellt.

Es ist im Sinne der Erfindung bevorzugt, dass wenigstens ein Kommunikationsmodul Bestandteil einer Werkzeugmaschine ist. Beispielsweise kann eine Werkzeugmaschine einen Sender als Kommunikationsmodul umfassen, um Melde- und/oder Steuersignale an ein Hilfsgerät, wie einen Staubsauger, zu senden. Es kann aber im Sinne der Erfindung auch bevorzugt sein, dass die Werkzeugmaschine einen Empfänger als Kommunikationsmodul umfasst. Das kann beispielsweise dann von Vorteil sein, wenn die Werkzeugmaschine Betriebsdaten oder Zustandsinformationen von einem Hilfsgerät erhalten soll. Beispielsweise kann ein Staubsauger einen Sender umfassen, wobei mit dem Sender des Staubsaugers Daten an die Werkzeugmaschine gesendet werden können, wie «Filterabreinigung erforderlich» oder «Sammelbehälter voll». Solche Informationen können die Arbeit mit der Werkzeugmaschine betreffen oder beeinflussen, so dass eine energiesparende, robuste und unkomplizierte Kommunikation zwischen Sender und Empfänger all Kommunikationsmodule in einer Werkzeugmaschine und einem Hilfsgerät, wie einem Staubsauger, sehr zweckmäßig sind. Es kann aber im Sinne der Erfindung auch bevorzugt sein, dass die Kommunikationsmodule der Werkzeugmaschine und des Hilfsgeräts sowohl zum Senden, als auch zum Empfangen von Daten ausgebildet sind. In diesem Fall ist eine beidseitige, d.h. bidirektionale Kommunikation zwischen der Werkzeugmaschine und dem Hilfsgerät möglich. Besonders wenn die Werkzeugmaschine und/oder der Staubsauger batterie- oder ackubetrieben sind, kann die Erfindung besonders vorteilhaft eingesetzt werden, da durch die energiesparende Kommunikation die Reichweite der Batterie bzw. des Akkus erheblich weniger beansprucht wird als bei herkömmlichen Kommunikationsverfahren, die nicht blockweise und mit hoher Baudrate arbeiten. Darüber hinaus hat sich gezeigt, dass durch die Erfindung eine Erwärmung von elektronischen Komponenten des Systems erheblich reduziert werden kann. Beispielsweise kann mit der Erfindung die Erwärmung von Spannungsreglern besonders geringgehalten werden.

Es kann im Sinne der Erfindung auch bevorzugt sein, dass der Sender als Kommunikationsmodul Bestandteil einer Werkzeugmaschine ist und der Empfänger als Kommunikationsmodul Bestandteil einer Energieversorgungsvorrichtung, wie einer Batterie oder eines Akkumulators. Ein solche Konstellation kann beispielsweise hilfreich sein, wenn Daten von der Werkzeugmaschine an eine Energieversorgungsvorrichtung übermittelt werden sollen. Die übermittelten Daten können beispielsweise Betriebsdaten der Werkzeugmaschine oder ihrer Komponenten sein, wobei die ausgetauschten bzw. die übermittelten Daten beispielsweise in der Energieversorgungsvorrichtung abgespeichert werden können. Dazu kann die Energieversorgungsvorrichtung beispielsweise einen Datenspeicher umfassen. Die vorgeschlagene blockweise Datenübertragung mit bursts und breaks kann hier einen Beitrag dazu leisten, dass die Batterie und/oder der Akku der Werkzeugmaschine möglichst lange hält und dass möglichst lange Auflade-Intervalle ermöglicht werden können. Auch in diesem Anwendungsbeispiel kann es auch bevorzugt sein, dass die Kommunikationsmodule der Werkzeugmaschine und der Energieversorgungsvorrichtung sowohl zum Senden, als auch zum Empfangen von Daten ausgebildet sind, so dass mit der Erfindung eine beidseitige, d.h. bidirektionale Kommunikation zwischen der Werkzeugmaschine und der Energieversorgungsvorrichtung ermöglicht wird.

Es ist im Sinne der Erfindung bevorzugt, dass die Zeitspannen mit einer hohen Übertragungsintensität eine Dauer in einem Bereich von 1 bis 10 ms aufweisen, bevorzugt in einem Bereich von 3 bis 7 ms und besonders bevorzugt von 5 ms. Von der zur Verfügung stehenden Zeitspanne wird zumeist lediglich ein Bruchteil von weniger als 10 % für die tatsächlich Datenübertragung verwendet. Messdaten können beispielsweise in jedem zehnten Zeitfenster transportiert, d.h. zwischen den Kommunikationspartnern bzw. -modulen ausgetauscht werden. Ein solche Datenübertragung kann beispielsweise zwischen 500 und 1.500 µs dauern, wobei Zeitdauern van ca. 1.000 µs besonders bevorzugt sind. Dieser Wert entspricht vorzugsweise ca. 20 % der besonders bevorzugten Zeitspanne eines bursts. Eine mittlere Burst-Zeitspanne kann beispielsweise bei 10 % Zeitspanne für die Datenübertragung liegen, also beispielsweise bei ca. 500 µs.

Die Formulierung "Zeitspanne mit einer hohen Übertragungsintensität" ist im Sinne der Erfindung bevorzugt im Sinne einer "Sendezeit" oder eines "Zeitfensters zum Senden" zu verstehen. Sie kann vorzugsweise auch als "Burstzeit" verstanden werden. Die hohe Übertragungsintensität findet vorzugsweise insbesondere in dieser "Sendezeit" statt, wobei die Burstzeit circa 10 % der gesamten Übertragungszeit ausmacht.

Das Verhältnis zwischen burst-Zeiträumen und break-Zeiträumen kann beispielsweise in einem Bereich von 1 - 50 % liegen, wobei mindestens 50 % der Datenübertragung eine Pause vorliegt. Die bursts und/oder breaks können beispielweise in festgelegten Zeitfenstern von beispielsweise 10 ms Länge stattfinden. Ein Verhältnis zwischen burst-Zeiträumen und break-Zeiträumen von 10 % bedeutet dann beispielsweise, dass für einen Zeitraum von circa 1 ms Daten gesendet werden (burst), während für einen Zeitraum von circa 9 ms "Sendepause" (break) ist. Typischerweise können Übertragungs-Zeitfenster in einem Bereich von 1 - 100 ms liegen, wobei Übertragungs-Zeitfenster mit einer Länge von ca. 10 ms besonders bevorzugt sind.

Es ist im Sinne der Erfindung bevorzugt, dass zwischen dem ersten Kommunikationsmodul und dem zweiten Kommunikationsmodul eine leitungsgebundene Kommunikationsverbindung besteht, wobei die leitungsgebundene Kommunikationsverbindung in den Übertragungspausen im Standby-Betrieb sind. Insbesondere durch die Vorsehung eines Standby-Betrieb bzw. Standby-Modus kann der mittlere Stromverbrauch der vorgeschlagenen Datenübertragung erheblich gesenkt werden, so dass insbesondere der deutlich reduzierte Bedarf an elektrischer Energie im Vergleich zu konventionellen Datenübertragungsmethoden ohne blockweise Übertragung der Daten erreicht werden kann.

Es ist im Sinne der Erfindung bevorzugt, dass die Baudrate und/oder die Dauer von Übertragungspausen in Abhängigkeit von einer Datenlast ausgewählt werden. Das vorgeschlagene Datenübertragungs- und Kommunikationsverfahren kann weiter optimiert werden, indem die Baudrate und/oder die Dauer von Übertragungspausen in Abhängigkeit von einer Datenlast ausgewählt wird. Mit anderen Worten kann eine Optimierung des vorgeschlagenen Verfahrens dadurch erreicht werden, dass die Baudrate und/oder die Länge der Pausenzeiten variiert wird, wobei diese Variation insbesondere in Abhängigkeit von einer Datenlast erfolgt. Wenn beispielsweise eine große Datenmenge vom Sender an den Empfänger übertragen werden soll, kann eine vergleichsweise hohe Baudrate mit kurzen Pausenzeiten gewählt werden. Dafür kann die Baudrate reduziert und die Pausenzeiten verlängert werden, wenn kleinere Datenmengen übermittelt werden sollen. Tests haben gezeigt, dass eine Erhöhung der Baudrate überraschenderweise keinen Einfluss auf den Stromverbrauch des Kommunikationssystems hat. Mit anderen Worten konnte gezeigt werden, dass die Baudrate überraschenderweise nicht in den Bedarf an elektrischer Energie einfließt bzw. eingeht. Somit erhöht sich der Energieverbrauch für die Datenübertragung die Kommunikation überraschenderweise nicht, wenn Daten blockweise mit bursts und breaks und sehr hohen Baudraten übertragen werden, während der reduzierte Energieverbrauch während der Übertragungspausen, in denen die Kommunikationsleitungen vorzugsweise in einem Standby-Modus vorliegen, den mittleren Energieverbrauch des Kommunikationssystems wesentlich reduzieren kann. Auf diese Weise wird der insgesamt für Kommunikationszwecke benötigte Energiebedarf, beispielsweise in einer Werkzeugmaschine, die mindestens ein erstes und/oder ein zweites Kommunikationsmodul aufweist, deutlich verringert.

In einem zweiten Aspekt betrifft die Erfindung ein Verfahren zur leitungsgebundenen Kommunikation zwischen einem ersten Kommunikationsmodul und einem zweiten Kommunikationsmodul. Die für das Kommunikationssystem eingeführten Begriffe, Definitionen und technischen Vorteile gelten vorzugsweise für das Kommunikationsverfahren analog. Das Verfahren zur leitungsgebundenen Kommunikation zwischen einem ersten Kommunikationsmodul und einem zweiten Kommunikationsmodul ist durch den Verfahrensschritt des Sendens von Daten durch das erste Kommunikationsmodul an das zweite Kommunikationsmodul gekennzeichnet, wobei die zwischen dem ersten Kommunikationsmodul und dem zweiten Kommunikationsmodul ausgetauschten Daten blockweise und mit einer hohen Baudrate gesendet werden. Mit der Erfindung kann eine Reduktion des Energiebedarfs für Kommunikationszwecke in einem Kommunikationssystem mit mindestens zwei Kommunikationsmodulen erreicht werden. Dadurch kann eine besonders einfache und kostengünstige Spannungsversorgung, beispielsweise in einer Werkzeugmaschine, ermöglicht werden, die darüber hinaus ohne Kühlung oder erhöhten Kühlaufwand auskommt.

Es ist im Sinne der Erfindung bevorzugt, dass sich bei dem Austausch von Daten zwischen dem ersten Kommunikationsmodul und dem zweiten Kommunikationsmodul Zeitspannen mit einer hohen Übertragungsintensität ("bursts") und Übertragungspausen ("breaks") abwechseln.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung des Kommunikationssystems mit zwei Kommunikationsmodulen
- Fig. 2: schematische Darstellung des Kommunikationsverfahrens mit Zeitspannen mit hoher Übertragungsintensität und mit Übertragungspausen

### Ausführungsbeispiele und Figurenbeschreibung:

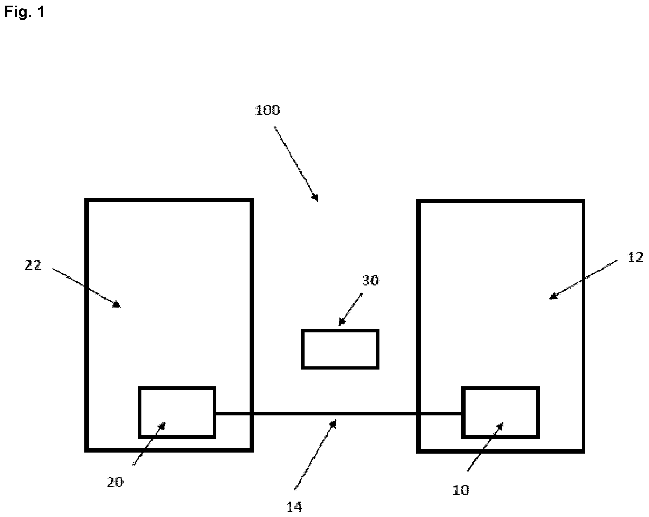

Figur 1 zeigt eine Ansicht einer bevorzugten Ausgestaltung des Kommunikationssystems 100 mit einem ersten Kommunikationsmodul 10 und einem zweiten Kommunikationsmodul 20. Das erste Kommunikationsmodul 10 kann beispielsweise an einem ersten Objekt 12 angeordnet vorliegen oder Bestandteil davon sein. Das zweite Kommunikationsmodul 20 kann beispielsweise an einem zweiten Objekt 22 angeordnet vorliegen oder Bestandteil davon sein. Bei dem ersten Objekt 12 kann es sich beispielsweise um eine Werkzeugmaschine (nicht dargestellt) handeln, während es sich bei dem zweiten Objekt 22 beispielsweise um eine Energieversorgungsvorrichtung (nicht dargestellt) handeln kann, mit der die Werkzeugmaschine mit elektrischer Energie ersorgt wird. Die Energieversorgungsvorrichtung als zweites Objekt 22 kann beispielsweise eine Batterie oder ein Akkumulator sein. Im Rahmen der vorliegenden Erfindung werden Daten 30 zwischen dem ersten Kommunikationsmodul 10 und dem zweiten Kommunikationsmodul 20 ausgetauscht, wobei die Daten 30 insbesondere von einem sendenden Kommunikationsmodul, beispielsweise dem ersten Kommunikationsmodul 10, an ein empfangendes Kommunikationsmodul, beispielsweise das zweite Kommunikationsmodul 20, gesendet werden. Es kann im Sinne der Erfindung aber auch bevorzugt sein, dass die Kommunikationsstrecke in dem Sinne bidirektional ausgebildet ist, dass Sender 10 und Empfänger 20 ihre Rollen tauschen und dann ihrerseits als Empfänger 20 und Sender 10 fungieren können. In einem anderen Ausführungsbeispiel der Erfindung kann das erste Objekt 12 beispielsweise eine Werkzeugmaschine sein, während das zweite Objekt 22 ein Hilfsgerät, wie ein Staubsauger oder eine Vorschubvorrichtung, sein kann. Zwischen dem ersten Kommunikationsmodul 10 und dem zweiten Kommunikationsmodul 20 besteht vorzugsweise eine Kommunikationsverbindung 14, die eine leitungsgebundene Kommunikation zwischen dem ersten Kommunikationsmodul 10 und dem zweiten Kommunikationsmodul 20 des Kommunikationssystems 100 ermöglicht. Die Kommunikationsverbindung 14 kann beispielsweise Kommunikationsleitungen umfassen oder aus diesen gebildet sein.

Fig. 2 zeigt eine schematische Darstellung des Kommunikationsverfahrens mit Zeitspannen a mit hoher Übertragungsintensität und mit Übertragungspausen b. Die Zeitspannen a mit hoher Übertragungsintensität werden im Sinne der Erfindung bevorzugt auch als "bursts" bezeichnet, während die Übertragungspausen vorzugsweise auch als "breaks" bezeichnet werden. Die schwarzen Blöcke symbolisieren die Zeitspannen a mit hoher Übertragungsintensität, in denen Daten vom ersten Kommunikationsmodul 10 an das zweite Kommunikationsmodul 20 übertragen werden. Die Übertragungspausen zwischen den bursts werden mit dem Buchstaben b bezeichnet, wie in Fig. 2 beispielhaft dargestellt ist. In der oberen Hälfte von Fig. 2 ist das Verhalten beispielsweise des ersten Kommunikationsmoduls 10 dargestellt, während in der unteren Bildhälfte das Verhalten des zweiten Kommunikationsmoduls 20 dargestellt ist. Während das erste Kommunikationsmodul 10 zunächst Daten 30 in vier Blöcken sendet und das zweite Kommunikationsmodul 20 in diesem Zeitraum die vier Datenblöcke empfängt, tauschen die Kommunikationsmodul 10, 20 anschließend ihre Rollen, so dass das erste Kommunikationsmodul 10 Daten 30 empfängt, während das zweite Kommunikationsmodul 20 Daten 30 sendet. Dabei werden nach dem Tausch der Rollen der Kommunikationsmodule 10, 20 zwei Blöcke von Daten 30 gesendet und empfangen.

### Bezugszeichenliste

- 10: erstes Kommunikationsmodul
- 12: erstes Objekt, das ein erstes Kommunikationsmodul aufweist
- 14: Kommunikationsleitung
- 20: zweites Kommunikationsmodul
- 22: Objekt, das ein zweites Kommunikationsmodul aufweist
- 30: Daten
- 100: Kommunikationssystem
- a: Zeitspanne mit hoher Übertragungsintensität ("burst")
- b: Übertragungspause ("break")

## Patentansprüche

1. System (100) zur leitungsgebundenen Kommunikation zwischen einem ersten Kommunikationsmodul (10) und einem zweiten Kommunikationsmodul (20)
**dadurch gekennzeichnet, dass**
die zwischen dem ersten Kommunikationsmodul (10) und dem zweiten Kommunikationsmodul (20) ausgetauschten Daten (30) blockweise und mit einer hohen Baudrate gesendet werden.

2. System (100) nach Anspruch 1
**dadurch gekennzeichnet, dass**
die Baudrate in einem Bereich von 100 kBit/s bis 5 Mbit/s liegt.

3. System (100) nach Anspruch 1 oder 2
**dadurch gekennzeichnet, dass**
sich bei dem Austausch von Daten (30) zwischen dem ersten Kommunikationsmodul (10) und dem zweiten Kommunikationsmodul (20) Zeitspannen mit einer hohen Übertragungsintensität und Übertragungspausen abwechseln.

4. System (100) nach Anspruch 3
**dadurch gekennzeichnet, dass**
die Zeitspannen mit einer hohen Übertragungsintensität eine Dauer in einem Bereich von 1 bis 10 ms aufweisen, bevorzugt in einem Bereich von 3 bis 7 ms und besonders bevorzugt von 5 ms.

5. System (100) nach einem der Ansprüche 3 oder 4
**dadurch gekennzeichnet, dass**
zwischen dem ersten Kommunikationsmodul (10) und dem zweiten Kommunikationsmodul (20) eine leitungsgebundene Kommunikationsverbindung (14) besteht, wobei die leitungsgebundene Kommunikationsverbindung (14) in den Übertragungspausen in einem Standby-Betrieb sind.

6. System (100) nach einem der vorhergehenden Ansprüche
**dadurch gekennzeichnet, dass**
die Baudrate und/oder die Dauer von Übertragungspausen in Abhängigkeit von einer Datenlast ausgewählt werden.

7. Verfahren zur leitungsgebundenen Kommunikation zwischen einem Sender (10) und einem Empfänger (20)
**gekennzeichnet durch** den **Verfahrensschritt** des Sendens von Daten (30) durch das erste Kommunikationsmodul (10) an das zweite Kommunikationsmodul (20), wobei die zwischen dem ersten Kommunikationsmodul (10) und dem zweiten Kommunikationsmodul (20) ausgetauschten Daten (30) blockweise und mit einer hohen Baudrate gesendet werden.

8. Verfahren nach Anspruch 7
**dadurch gekennzeichnet, dass**
sich bei dem Austausch von Daten (30) zwischen dem ersten Kommunikationsmodul (10) und dem zweiten Kommunikationsmodul (20) Zeitspannen mit einer hohen Übertragungsintensität und Übertragungspausen abwechseln.
